# EUROPEAN PATENT SPECIFICATION

(11) **EP 1 064 852 B1**
(45) Date of publication and mention of the grant of the patent: **02.05.2003**
(21) Application number: 99202075.0
(22) Date of filing: 28.06.1999
(51) Int. Cl.: A23G 3/20

(54) **Method and apparatus for depositing a food product**
Verfahren und Vorrichtung um Lebensmittel zu plazieren
Procédé et dispositif pour la délivrance d'une substance alimentaire

(43) Date of publication of application: 03.01.2001
(73) Proprietor: SOCIETE DES PRODUITS NESTLE S.A., 1800 Vevey (CH)
(72) Inventor: Nelson Roy B., York YO 3 19 HP (GB); Nelson, David Howard, Wigginton, York YO32 2TW (GB)
(74) Representative: Borne, Patrice Daniel

(56) References cited:
- FR-A- 2 716 078
- GB-A- 2 026 378
- US-A- 4 771 726

## Description

The present invention relates to the depositing of food products, in particular to the depositing of confectionery products such as chocolate, caramels, toffees, fudges, high boiled sweets, etc.

The manufacturing of shaped food products, in particular confectionery, generally comprises a step of depositing into a mould so as to set the desired shape to the product. The method includes a step of injecting a metered amount of food mass by means of a piston through a nozzle into a mould. Then, cooling or drying of the deposited mass is carried out until setting the final product is properly achieved.

Various patent documents illustrate the depositing technology for confectionery. For instance, US Patent 4,004,716 and US Patent 4,089,438 both relates to a depositor of confectionery material into moulds. Other documents can be cited as example related to a same technical field such as US Patent 2,837,041; GB 2 026 378 or FR 1 132 821.

However, the above-discussed depositing process, as traditionally applied, particularly for confectionery of high viscosity, suffers from serious drawbacks that have not until now been resolved. One of the main disadvantages relates to the difficulty the material of a deposited portion has to separate from the material remaining in the depositing nozzle. The material tends to stretch out in a tail that does not easily break under its own weight and gravity. The phenomenon is known as the "tailing" problem. This defect may consequently affect the accuracy of the dosing, weight and shape of the final moulded product. After depositing, many strings are formed across the moulds which are not hygienic and so need to be removed by cleaning. Tailing is also aesthetically unacceptable and can cause major quality defects. These defects may lead to difficulties in wrapping the product. For instance, when caramel is deposited in a shell-moulded chocolate product, the tail may cause a channel through the chocolate cover and stick to the packaging. Tailing may also cause clog up of the nozzle or blocking of moving parts of the depositing device.

Past attempts to reduce tailing have consisted in physically cutting the tail. For instance, GB 2 026 378 proposes to discharge a pulse of steam or compressed air through the nozzle at the time the separation of the confectionery mass. However, these solutions have proved not to be effective, are complicated and costly to implement.

The present invention overcomes the problems associated with the formation of tail during the depositing process of a food mass in a mould, in particular for confectionery products, and alleviates the need for additional mechanical or gas pulsing devices. In consequence, the present invention permits to confer a regular flat surface on top of the deposit which has proved to be beneficial for the weight control, the final look and mouthfeel of the product and the ease of wrapping.

Accordingly, the present invention relates to a device for depositing confectionery into a mould comprising
pressure means comprising a piston member for discharging in a stroke a confectionery mass into the mould,
means for cutting off the stroke to stop the discharge of the confectionery including a valve means and a nozzle having an outlet portion of reduced diameter, wherein
said piston member has an operative stroke profile comprising a velocity which increases during the stroke, and
said valve means moves relatively to the nozzle during cut-off and has at least a starting cut-off motion at a magnitude of at least 400 mm/sec.

Without being necessarily bound to this theory, it is supposed that the combination of a "boosted" discharge of the product with a high-speed cut-off through a reduced diameter nozzle breaks the elastic tail.

Preferably, the velocity of the operative stroke profile increases in a ratio comprised between 2:1 to 4:1.

In a first alternative, the operative stroke profile comprises at least two sequentially distinct velocity periods. A first period has a predetermined velocity and a second period has a velocity higher than the first period. The first period corresponds to the initial deposit run and the second period corresponds to the final boost.

In a preferable embodiment, the second period represents less than 15% of the stroke, more preferably, it is comprised between 5 to 10% of the stroke's time so as to minimise the mechanical shock/wear and to minimise the work done by the hydraulic drive fluids.

In another alternative, the operative stroke profile comprises a continuous increase of the velocity until to reach a terminal predetermined boosted velocity.

In a preferred aspect of the invention, the outlet portion of the nozzle is sized so as to maintain a sufficient velocity of the product's flow which so participates to the cut-off anti-tailing. In particular, its outlet portion has a diameter less than 5 mm, and preferably, less than 2 mm. The outlet portion has also a length of less than 1.5 mm, preferably about 1 mm so as to lower the possibility of in-flight errors by reduction of hold-up in the nozzle.

The present invention is particularly suitable for a wide range of depositable food products. In particular, it has been found advantageous to use the apparatus of the invention for confectionery products having a shear viscosity ranging from 1 to 2500 poise. It must be noted that these viscosities may be of Newtonian or Non-Newtonian characteristics. The yield and viscosity values can provide strong visco-elastic properties from the material which is mainly the cause of the tailing problem in depositing. Therefore, viscosity measurements are only an indication of flowability and do not totally reflect the specific visco-elastic properties of a food material.

In a preferable aspect of the invention, the pressure means are refilled after the depositing stage by applying a pressure sufficient to provoke the suction of the confectionery mass in the pressure means until the piston member is in its ascent position. Preferably, the pressure is of at least 4 bars. A pressurised fill system has proved to be important to ensure repeatability and weight control of the moulded products.

The volume of the material deposited may vary depending upon the desired sizes of the moulded product to be produced. However, successful results have been obtained by the apparatus of the invention for producing deposits in the range of 0.8 to 50 grams. The apparatus has specifically shown a very high efficiency for moulding products of 2 to 10 grams. Repeatable accuracy between +/- 0.03 grams has been obtained with a flat upper surface of the moulded product.

It has also been found that the production cycles can reach very high-speed level with expected range of 10 to 36 strokes per minute. This is possible while not affecting the piston and cut-off performance.

The present invention also relates to a method for depositing a viscous food mass into a mould comprising
applying a pressure to the confectionery by a pressure means at a velocity which increases during the stroke of the pressure means,
passing the confectionery through a nozzle outlet portion of reduced diameter,
stopping the discharge of the food mass by a valve means actuating at a cut-off motion of at least 400 mm/sec.

The present invention will now be described in further detail by way of example only with reference to the accompanying figures.

FIG. 1 is a schematic drawing of a preferred embodiment of an apparatus for carrying out the method of the present invention during the depositing cycle.

FIG. 2 is a schematic drawing of a preferred embodiment of an apparatus for carrying out the method of the present invention during the suction fill for preparing the next depositing cycle.

The apparatus of the present invention is generally identified by reference numeral 10 in the figures. The complete depositing system comprises at least a series of moulds, generally attached to conveyor means (not represented). The conveyor means are intermittently moved to place an empty mould 3 in position under the depositing apparatus 10 after termination of each depositing cycle. After depositing, the food product is moved away by the conveyor means and it is allowed to at least partly solidify, as for example, under a cooling tunnel or similar cooling means (not represented). Then, the moulded food product is removed from the mould by inversion of the mould. If needed, ejection's means are used to facilitate the removal of the food product.

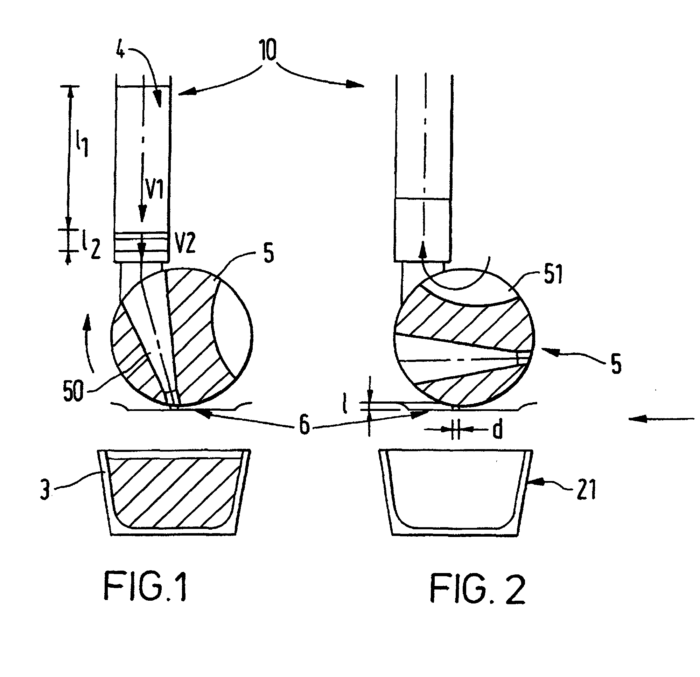

The apparatus of the invention comprises pressure means 4, generally a piston/chamber assembly, connected to a hopper for storage of a large quantity of food material in viscous or liquid state. A rotary valve 5, comprising a passage 50 for the fluid, is associated to the pressure means to connect the outlet of the chamber to a nozzle 6. During the deposition cycle, the rotary valve 5 is in an open configuration shown in FIG. 1. The piston is moved downwardly into the chamber to push the viscous product contained therein toward the nozzle 6. According to one of the aspect of the invention, the piston is driven in accordance with an operative stroke profile which includes a first stroke length l₁ during which the piston has a velocity v₁ and a second stroke length l₂ during which the piston has a second velocity v₂. The velocity v₂ is greater than the velocity v₁. Preferably, the velocity v₂ has at least twice the magnitude of the velocity v₁. However, the velocity v₂ starts at a relatively low level of stroke of the piston, as l₂ is preferably lower than l₁. The stroke profile is controlled by an electronic controlling device comprising an encoder coupled to the piston means which provides feedback information to a computer.

Just before the end of the deposit stroke of the piston, the rotary valve is rotated to close the passage 50 at a very high speed. Suitable speed is at least 400 mm/sec., preferably of 500 to 1000 mm/sec. For a rotary valve, the speed is measured as the circumferential distance travelled by the valve by time unit. The timing is controlled by an electronic controlling device permitting an accurate cut-off of the valve in the order of several milliseconds. The electronic device may also comprise an encoder attached to the valve which loops back to a computer. The control of the cut off of the valve is precisely tied up to the stroke profile of the piston so as to find an optimum result on the tail reduction depending on the specific characteristic of the products to be deposited. It is possible to start the valve cutting off at the given high-speed conditions, then slowing down slightly to finish movement to the suction position of FIG. 2. At this stage, depositing of filling material is fully discontinued. It must be noted that the valve speed is independent from the viscosity of the product.

One of the other important aspects of the invention is the specific size outlet portion of the nozzle 6 which combined with the piston motion and the high-speed cut-off of the valve participates to the disappearance of the tail and to accuracy of the volumetric feed. The diameter or larger section d of the nozzle is less than 5 mm, preferably in the order of 1.5 mm. It must be noted that the diameter may vary depending upon the viscosity of the food material to be deposited to maintain a sufficiently high cut-off velocity. The nozzle has also a length *l* sufficiently low to reduce the hold-up in the nozzle after the cut-off of the valve as shown in FIG. 2. The length *1* of the nozzle represents the distance measured between the outlet of the nozzle 6 and the outlet of the valve 5 when the passage of the valve is coaxial with the nozzle.

As shown in FIG. 2, the pressure means 10 comprising the chamber are refilled after the depositing cycle has been completed. According to another important feature of the invention, the pressure means are fed at a pressure sufficient to provoke the suction of the liquid product into the chamber. Pressure feeding is important to ensure an accurate volumetric filling of the pressure means. For that, the rotary valve further comprises a peripheral depression 51 communicating with a source of pressurised product, preferably gas or pump pressurised (not represented). In the position illustrated in FIG. 2, where the piston is lowered and the valve cut-off, the depression 51 connects the chamber outlet of the pressure means 4 to a feed reservoir (accumulator) at a pressure of at least 4 bars, preferably at about 6 bars, which causes a high volumetric accuracy pressurised fill during the ascent of the piston in start fill position. It has so been found that the extreme accuracy and repeatability of weights during the deposition is very dependent from the pressurised filling operation in which an accurate volumetric feed can be completed. The apparatus is ready for another deposition cycle.

It must be noted that the depositing apparatus may serve to deposit a filling of confectionery mass in a mould already partly filled with other types of confectionery material. A typical application would be the production of shell-moulded chocolate products with viscous filling such as caramel. The method would be to fill melted chocolate with a normal depositing device, then reversing the mould and shaking to remove the excess of chocolate so as to provide a U-shaped cup of chocolate. Then, a filling of caramel would be deposited according to the method and apparatus of the invention. Finally, a layer of chocolate would be sprayed on the caramel's upper surface to form the bottom of the confectionery after demoulding.

As an example, typical standard sweets of 3 grams have been successfully deposited by the method and apparatus of the invention. The operative stroke profile was set up at approximately 0.0064 grams/millisecond for the initial stroke period corresponding to stroke portion *l*_{*1*} of about 17 mm and approximately 0.023 grams/millisecond for the terminal boost period corresponding to stroke portion l₂ of about 3 mm. The initial period took place over 400 milliseconds and the final boost period over 20 milliseconds.

While the invention has been described with regard to a specific embodiment, it should be noted that various modifications might be made without departing from the scope of the invention. For example, the valve means can also be a needle valve or a slipper valve.

## Claims

1. A device for depositing confectionery into a mould comprising
pressure means comprising a piston member for discharging in a stroke a confectionery mass into the mould,
means for cutting off the stroke to stop the discharge of the confectionery including a valve means and a nozzle having an outlet portion of reduced diameter, wherein
said piston member has an operative stroke profile comprising a velocity which increases during the stroke, and
said valve means moves relatively to the nozzle during cut-off and has at least a starting cut-off motion at a magnitude of at least 400 mm/sec.

2. A device as claimed in claim 1, wherein the velocity of the operative stroke profile increases in a ratio comprised between 2:1 to 4:1.

3. A device as claimed in claim 1 or 2, wherein the operative stroke profile comprises at least two sequentially distinct velocity period; a first period having a predetermined velocity and a second period having a velocity higher than the first period.

4. A device as claimed in claim 3, wherein the second period represents less than 15% of the stroke.

5. A device as claimed in claim 4, wherein the second period represents between 5 to 10% of the stroke.

6. A device as claimed in claim 1 or 2, wherein the operative stroke profile comprises a continuous increase of the velocity until to reach a terminal predetermined boosted velocity.

7. A device as claimed in any of the preceding claims, wherein the outlet portion has a diameter less than 5 mm, preferably less than 2 mm.

8. A device as claimed in any of the preceding claims, wherein the outlet portion has a length less than 1.5 mm, preferably about 1 mm.

9. A device as claimed in any of the preceding claims, wherein the cut-off motion of the valve means is comprised between 500 to 1000 mm/second.

10. A device as claimed in any of the preceding claims, wherein the valve means is a high-speed valve.

11. A device as claimed in claim 10, wherein the high-speed valve is a rotary, a needle or a slipper valve.

12. A device as claimed in any of the preceding claims, wherein the pressure means are refilled after the depositing stage by applying a pressure sufficient to provoke the suction of the confectionery mass in the pressure means until the piston member is in its ascent position.

13. A device as claimed in claim 11, wherein the refilling pressure is of at least 4 bars, preferably about 6 bars.

14. A method for depositing a viscous or liquid food mass into a mould comprising
applying a pressure to the food mass by a pressure means at a velocity which increases during the stroke of the pressure means,
passing the confectionery through a nozzle outlet portion of reduced diameter,
stopping the discharge of the food mass by a valve means actuating at a cut-off motion of at least 400 mm/sec.

15. A method as claimed in claim 13, wherein pressure on the food mass is applied during the stroke at an initial velocity and at a terminal velocity greater than the first velocity; the ratio between the terminal velocity and the initial velocity being comprised between 2:1 to 4:1.

16. A method as claimed in claim 14, wherein the initial velocity is constantly maintained during a first period and the terminal velocity is constantly maintained during a second period shorter than the first period.

17. A method as claimed in claim 15, wherein the shorter second period represents between 5 to 10% of the stroke.

18. A method as claimed in claim 14, wherein the velocity is gradually increased between the initial velocity and the terminal velocity.

19. A method as claimed in any of claims 13 to 17, wherein it comprises passing the food mass through a nozzle outlet of a diameter less than 2 mm, preferably less than 1.5 mm and a length of less than 1.5 mm, preferably about 1 mm.

20. A method as claimed in any of claims 13 to 17, wherein it consists of depositing a volume of food mass comprised between 0.8 to 50 grams, preferably 2 to 10 grams, in each stroke.

21. A method as claimed in any of claims 13 to 19, wherein it consists of depositing a food mass having a viscosity comprised between 1 to 2500 poise.

22. A method as claimed in claim 18, wherein the food mass is a confectionery mass.

## Patentansprüche

1. Vorrichtung zum Ablagern von Süßwaren in eine Form mit
einer Druckvorrichtung, die ein Kolbenglied zum Ausstoßen einer Süßwarenmasse in die Form in einem Stoß aufweist,
einer Vorrichtung zum Abschneiden des Stoßes, um den Ausstoß der Süßware zu stoppen, die eine Ventilvorrichtung und eine Düse mit einem Auslassabschnitt verminderten Durchmessers umfasst, wobei
das Kolbenglied ein Betriebsstoßprofil mit einer Geschwindigkeit aufweist, die während des Stoßes zunimmt, und
die Ventilvorrichtung sich relativ zu der Düse während des Abschneidens bewegt und zumindest eine Anfangsabschneidebewegung in der Größenordnung von zumindest 400 mm/s aufweist.

2. Vorrichtung nach Anspruch 1, bei der die Geschwindigkeit des Betriebsstoßprofils in einem Verhältnis zwischen 2:1 bis 4:1 zunimmt.

3. Vorrichtung nach Anspruch 1 oder 2, bei der das Betriebsstoßprofil zumindest zwei aufeinanderfolgende getrennte Geschwindigkeitsperioden umfasst, eine erste Periode mit einer bestimmten Geschwindigkeit und eine zweite Periode mit einer Geschwindigkeit, die größer als die der ersten Periode ist.

4. Vorrichtung nach Anspruch 3, bei der die zweite Periode weniger als 15% des Stoßes ausmacht.

5. Vorrichtung nach Anspruch 4, bei der die zweite Periode zwischen 5 bis 10% des Stoßes ausmacht.

6. Vorrichtung nach Anspruch 1 oder 2, bei der das Betriebsstoßprofil eine andauernde Zunahme der Geschwindigkeit umfasst, bis sie eine bestimmte gesteigerte Endgeschwindigkeit erreicht.

7. Vorrichtung nach einem der vorhergehenden Ansprüche, bei der der Auslassabschnitt einen Durchmesser von weniger als 5 mm, vorzugsweise von weniger als 2 mm aufweist.

8. Vorrichtung nach einem der vorhergehenden Ansprüche, bei der der Auslassabschnitt eine Ausdehnung von weniger als 1,5 mm, vorzugsweise von ungefähr 1 mm aufweist.

9. Vorrichtung nach einem der vorhergehenden Ansprüche, bei der die Abschneidebewegung der Ventilvorrichtung zwischen 500 bis 1000 mm/s liegt.

10. Vorrichtung nach einem der vorhergehenden Ansprüche, bei der die Ventilvorrichtung ein Hochgeschwindigkeitsventil ist.

11. Vorrichtung nach Anspruch 10, bei der das Hochgeschwindigkeitsventil ein Drehventil, ein Nadelventil oder ein Gleitventil ist.

12. Vorrichtung nach einem der vorhergehenden Ansprüche, bei der die Druckvorrichtung nach dem Ablagerungsschritt wieder befüllt wird, indem ein Druck angelegt wird, der hinreichend ist, um das Ansaugen der Süßwarenmasse in die Druckvorrichtung hervorzurufen, bis das Kolbenglied in einer oberen Stellung ist.

13. Vorrichtung nach Anspruch 12, bei der der Wiederauffülldruck zumindest 4 Bar, vorzugsweise 6 Bar beträgt.

14. Verfahren zum Ablagern einer viskosen oder flüssigen Lebensmittelmasse in eine Form mit den folgenden Schritten:
Anlegen eines Drucks an die Lebensmittelmasse durch eine Druckvorrichtung mit einer Geschwindigkeit, die während des Stoßes der Druckvorrichtung zunimmt,
Leiten der Süßware durch einen Düsenauslassabschnitt verminderten Durchmessers, und
Stoppen des Ausstoßes der Lebensmittelmasse durch eine Ventilvorrichtung, die eine Abschneidebewegung von zumindest 400 mm/s bewirkt.

15. Verfahren nach Anspruch 14, bei dem Druck auf die Lebensmittelmasse während des Stoßes bei einer Anfangsgeschwindigkeit und bei einer Endgeschwindigkeit ausgeübt wird, die größer als die Anfangsgeschwindigkeit ist, wobei das Verhältnis zwischen der Endgeschwindigkeit und der Anfangsgeschwindigkeit zwischen 2:1 bis 4:1 liegt.

16. Verfahren nach Anspruch 15, bei dem die Anfangsgeschwindigkeit während einer ersten Periode konstant gehalten wird, und die Endgeschwindigkeit während einer zweiten Periode konstant gehalten wird, die kürzer als die erste Periode ist.

17. Verfahren nach Anspruch 16, bei dem die zweite kürzere Periode zwischen 5 bis 10% des Stoßes ausmacht.

18. Verfahren nach Anspruch 15, bei dem die Geschwindigkeit zwischen der Anfangsgeschwindigkeit und der Endgeschwindigkeit allmählich zunimmt.

19. Verfahren nach einem der Ansprüche 14 bis 18, bei dem es das Leiten der Lebensmittelmasse durch einen Düsenauslass mit einem Durchmesser von weniger als 2 mm, vorzugsweise von weniger als 1,5 mm und einer Länge von weniger als 1,5 mm, vorzugsweise von ungefähr 1 mm umfasst.

20. Verfahren nach einem der Ansprüche 14 bis 18, bei dem es das Ablagern eines Volumens der Lebensmittelmasse zwischen 0,8 bis 50 Gramm, vorzugsweise zwischen 2 bis 10 Gramm in jedem Stoß umfasst.

21. Verfahren nach einem der Ansprüche 14 bis 20, bei dem es das Ablagern einer Lebensmittelmasse mit einer Viskosität zwischen 1 bis 2500 Poise umfasst.

22. Verfahren nach Anspruch 19, bei dem die Lebensmittelmasse eine Süßwarenmasse ist.

## Revendications

1. Dispositif pour déposer du produit de confiserie dans un moule comprenant
un moyen de pression comprenant un élément de piston servant à décharger, en une course, une masse de confiserie dans le moule,
un moyen servant à arrêter la course dans le but de stopper la décharge du produit de confiserie incluant un moyen formant vanne et une buse comportant une partie de sortie à diamètre réduit, dans lequel
ledit élément de piston a un profil de course fonctionnelle produisant une vélocité qui augmente pendant la course, et
ledit moyen formant vanne se déplace relativement à la buse pendant l'arrêt et a au moins un mouvement de démarrage d'arrêt à une amplitude d'au moins 400 mm/s.

2. Dispositif selon la revendication 1, dans lequel la vélocité du profil de course fonctionnelle augmente dans un rapport compris entre 2 : 1 et 4 : 1.

3. Dispositif selon la revendication 1 ou 2, dans lequel le profil de course fonctionnelle comprend au moins deux périodes à vélocité séquentiellement distincte ; une première période ayant une vélocité prédéterminée et une seconde période ayant une vélocité supérieure à la première période.

4. Dispositif selon la revendication 3, dans lequel la seconde période représente moins de 15 % de la course.

5. Dispositif selon la revendication 4, dans lequel la seconde période représente entre 5 et 10 % de la course.

6. Dispositif selon la revendication 1 ou 2, dans lequel le profil de course fonctionnelle comprend une augmentation continue de la vélocité jusqu'à atteindre une vélocité amplifiée prédéterminée finale.

7. Dispositif selon l'une quelconque des revendications précédentes, dans lequel la partie de sortie a un diamètre inférieur à 5 mm, de préférence inférieur à 2 mm.

8. Dispositif selon l'une quelconque des revendications précédentes, dans lequel la partie de sortie a une longueur inférieure à 1,5 mm, de préférence d'environ 1 mm.

9. Dispositif selon l'une quelconque des revendications précédentes, dans lequel le mouvement de fermeture du moyen formant vanne est compris entre 500 à 1000 mm/seconde.

10. Dispositif selon l'une quelconque des revendications précédentes, dans lequel le moyen formant vanne est une vanne à vitesse élevée.

11. Dispositif selon la revendication 10, dans lequel la vanne à vitesse élevée est une vanne tournante, à pointeau, ou à glissement.

12. Dispositif selon l'une quelconque des revendications précédentes, dans lequel les moyens de pression sont rechargés après l'étape de dépôt par application d'une pression suffisant à provoquer l'aspiration de la masse de confiserie dans les moyens de pression jusqu'à ce que l'élément formant piston soit dans sa position montante.

13. Dispositif selon la revendication 11, dans lequel la pression de recharge est d'au moins 4 bars, de préférence, d'environ 6 bars.

14. Procédé pour déposer une masse alimentaire visqueuse ou liquide dans un moule comprenant
l'application d'une pression à la masse alimentaire à l'aide d'un moyen de pression à une vélocité qui augmente pendant la course du moyen de pression,
le passage du produit de confiserie par une partie de sortie de buse à diamètre réduit,
l'arrêt de la décharge de la masse alimentaire par un moyen formant vanne agissant au niveau d'un mouvement d'arrêt d'au moins 400 mm/s.

15. Procédé selon la revendication 14, dans lequel la pression appliquée à la masse alimentaire est appliquée pendant la course à une vélocité initiale et à une vélocité finale supérieure à la première vélocité ; le rapport entre la vélocité finale et la vélocité initiale étant compris entre 2 : 1 et 4 : 1.

16. Procédé selon la revendication 14, dans lequel la vélocité initiale est maintenue constante pendant une première période, et dans lequel la vélocité finale est maintenue constante pendant une seconde période plus courte que la première période.

17. Procédé selon la revendication 15, dans lequel la seconde période plus courte représente entre 5 et 10 % de la course.

18. Procédé selon la revendication 14, dans lequel la vélocité augmente graduellement entre la vélocité initiale et la vélocité finale.

19. Procédé selon l'une quelconque des revendications 14 à 17, dans lequel il est question du passage de la masse alimentaire par une sortie de buse de diamètre inférieur à 2 mm, de préférence inférieur à 1,5 mm et de longueur inférieure à 1,5 mm, de préférence d'environ 1 mm.

20. Procédé selon l'une quelconque des revendications 14 à 17, dans lequel il est question du dépôt d'un volume de masse alimentaire compris entre 0,8 et 50 grammes, de préférence 2 et 10 grammes, lors de chaque course.

21. Procédé selon l'une quelconque des revendications 14 à 19, dans lequel il est question du dépôt d'une masse alimentaire ayant une viscosité comprise entre 1 et 2500 poises.

22. Procédé selon la revendication 18, dans lequel la masse alimentaire est une masse de confiserie.
